(19)

Europäisches
Patentamt

European
Patent Office

Office européen
des brevets

(11) **EP 4 383 124 A1**

(12) **EUROPEAN PATENT APPLICATION**

(43) Date of publication:
**12.06.2024 Bulletin 2024/24**

(21) Application number: **22383194.2**

(22) Date of filing: **07.12.2022**

(51) International Patent Classification (IPC):
***G06F 40/44*** *(2020.01)*

(52) Cooperative Patent Classification (CPC):
**G06F 40/44**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Multiverse Computing S.L.**
**20014 Donostia / San Sebastián (ES)**

(72) Inventor: **ORÚS, Román**
**San Sebastián (ES)**

(74) Representative: **Balder IP Law, S.L.**
**Paseo de la Castellana 93**
**5a planta**
**28046 Madrid (ES)**

(54) **LANGUAGE PROCESSING USING QUANTUM AND QUANTUM-INSPIRED LANGUAGE MODELS**

(57) A system and method for determining a probability distribution of a sentence are described herein. The system includes a processor determining a syntactic tensor network, which includes correlated syntactic elements, for the sentence. Each syntactic element includes words and linguistic information for each syntactic element. The processor determines a probability tensor which includes a probability distribution for each syntactic element in the sentence based on the linguistic information for the syntactic element. The processor determines the probability distribution of the sentence based on the probability tensor of each syntactic element in the sentence. In an embodiment, the processor determines a probability tensor of a word in the sentence, based on a syntactic neighborhood of the word and a linguistic group associated with its immediate neighbors. In another embodiment, the processor determines that an element is correlated with other elements and fuses the index of the probability tensor of each element.

EP 4 383 124 A1

**Description**

<u>FIELD</u>

Various embodiments are described herein that generally relate to language processing using quantum and quantum-inspired language models.

<u>BACKGROUND</u>

The following paragraphs are provided by way of background to the present disclosure. They are not, however, an admission that anything discussed therein is prior art or part of the knowledge of persons skilled in the art.

Improvements in computing devices have enabled greater and greater use of complex models to analyze large datasets. Statistical language modeling, for example, aims to capture joint probability distributions of sequences of words. Existing statistical language models include next-word prediction and vector embeddings of words based on colocation.

These existing approaches to language models typically involve various types of neural networks, such as convolutional neural networks, recurrent neural networks, and transformers. However, while having reasonable performance, these approaches suffer from non-explainability, that is, their algorithms and processes are not comprehensible to humans.

Efforts to build on these approaches encounter difficulties arising from the high-dimensionality of the data, given that language is not random. One approach is to truncate sequences under consideration to finite length phrases, or n-grams. For example, 3-gram and 4-gram models have been employed effectively for speech recognition and translation. However, this approach is ill-suited in applications involving long-distance correlations.

There is a need for a system and method that addresses the challenges and/or shortcomings described above.

<u>SUMMARY OF VARIOUS EMBODIMENTS</u>

Various embodiments of a system and method for language processing using quantum and quantum-inspired language models are provided according to the teachings herein.

According to one aspect of the invention, there is disclosed a system for determining a probability distribution of a sentence. The system comprises at least one processor configured to: determine a syntactic tensor network for the sentence, the syntactic tensor network comprising a plurality of correlated syntactic elements, each of the syntactic elements comprising one or more words, and linguistic information for each syntactic element in the sentence; determine a probability tensor comprising a probability distribution for each syntactic element in the sentence based on the linguistic information for the syntactic element; and determine the probability distribution of the sentence based on the probability tensor of each syntactic element in the sentence.

In at least one embodiment, determining the probability distribution of the sentence comprises a tensor contraction on a tensor comprising each syntactic element of the sentence.

In at least one embodiment, the tensor contraction comprises determining a product of coefficients of the probability tensor for each syntactic element of the sentence according to equation $p_{w_1...w_n} = M^{[i]}_{e_1,A} ... M^{[j]}_{e_n,B}$ where $w_1 ... w_n$ are words in the sentence, $e_1 ... e_n$ are syntactic elements of the sentence, i and j are identifiers for the probability tensors M, and A ... B are indices defining a syntactic environment of the syntactic element.

In at least one embodiment, the syntactic environment of the syntactic element comprises a linguistic group of the syntactic element and the linguistic group of a neighboring syntactic element correlated with the syntactic element.

In at least one embodiment, the at least one processor is configured to determine a probability tensor of a word $w_n$ in the sentence, wherein n is a position of the word in the sentence, based on a syntactic neighborhood of the word $w_n$ and a linguistic group associated with at least one immediate neighbor of the word $w_n$.

In at least one embodiment, the syntactic tensor network is a tensor tree network.

In at least one embodiment, the tensor tree network is a matrix product state.

In at least one embodiment, the at least one processor is configured to determine that an element of the syntactic tensor network is correlated with two or more other elements; and in response to determining that an element of the syntactic tensor network is correlated with the two or more other elements, combine an index of the probability tensor of the element with each index of the two or more other elements to obtain a fused index for the probability tensor of the element.

In at least one embodiment, one or more syntactic elements of the plurality of syntactic elements comprise one or more language units and wherein the probability tensor for each of the one or more syntactic elements comprising one or more language units comprises probabilities associated with a merging operation of the one or more language units to obtain the syntactic element.

In at least one embodiment, an output of the merge operation is uniquely determined by the one or more linguistic units.

In at least one embodiment, the probability tensor is diagonal.

In at least one embodiment, the probability distribution of the probability tensor of each syntactic element is based on a statistical frequency of the element in a grammar of the sentence.

In at least one embodiment, the at least one processor is configured to retrieve the probability tensor from a database in communication with the at least one processor.

In at least one embodiment, the syntactic tensor network is a quantum state wherein the norm of the quantum state corresponds to the probability distribution of the sentence.

In at least one embodiment, the quantum state is obtained from a quantum circuit.

According to another aspect of the invention, there is disclosed a method for determining a probability distribution of a sentence. The method involves: determining a syntactic tensor network for the sentence, the syntactic tensor network comprising a plurality of correlated syntactic elements, each of the syntactic elements comprising one or more words, and linguistic information for each syntactic element in the sentence; determining a probability tensor comprising a probability distribution for each syntactic element in the sentence based on the linguistic information for the syntactic element; and determining the probability distribution of the sentence based on the probability tensor of each syntactic element in the sentence.

In at least one embodiment, determining the probability distribution of the sentence comprises a tensor contraction on a tensor comprising each syntactic element of the sentence.

In at least one embodiment, the tensor contraction comprises determining a product of coefficients of the probability tensor for each syntactic element of the sentence according to equation $p_{w_1 \ldots w_n} = M^{[i]}_{e_1,A} \ldots M^{[j]}_{e_n,B}$ where $w_1 \ldots w_n$ are words in the sentence, $e_1 \ldots e_n$ are syntactic elements of the sentence, i and j are identifiers for the probability tensors M, and A ... B are indices defining a syntactic environment of the syntactic element.

In at least one embodiment, the syntactic environment of the syntactic element comprises a linguistic group of the syntactic element and the linguistic group of a neighboring syntactic element correlated with the syntactic element.

In at least one embodiment, the method involves determining a probability tensor of a word $w_n$ in the sentence, wherein $n$ is a position of the word in the sentence, based on a syntactic neighborhood of the word $w_n$ and a linguistic group associated with at least one immediate neighbor of the word $w_n$.

In at least one embodiment, the syntactic tensor network is a tensor tree network.

In at least one embodiment, the tensor tree network is a matrix product state.

In at least one embodiment, the method involves determining that an element of the syntactic tensor network is correlated with two or more other elements; and in response to determining that an element of the syntactic tensor network is correlated with the two or more other elements, combining an index of the probability tensor of the element with each index of the two or more other elements to obtain a fused index for the probability tensor of the element.

In at least one embodiment, one or more syntactic elements of the plurality of syntactic elements comprise one or more language units and wherein the probability tensor for each of the one or more syntactic elements comprising one or more language units comprises probabilities associated with a merging operation of the one or more language units to obtain the syntactic element.

In at least one embodiment, an output of the merge operation is uniquely determined by the one or more linguistic units.

In at least one embodiment, the probability tensor is diagonal.

In at least one embodiment, the probability distribution of the probability tensor of each syntactic element is based on a statistical frequency of the element in a grammar of the sentence.

In at least one embodiment, the method involves retrieving the probability tensor from a database in communication with the at least one processor.

In at least one embodiment, the syntactic tensor network is a quantum state wherein the norm of the quantum state corresponds to the probability distribution of the sentence.

In at least one embodiment, the quantum state is obtained from a quantum circuit.

Other features and advantages of the present application will become apparent from the following detailed description taken together with the accompanying drawings. It should be understood, however, that the detailed description and the specific examples, while indicating preferred embodiments of the application, are given by way of illustration only, since various changes and modifications within the spirit and scope of the application will become apparent to those skilled in the art from this detailed description.

## BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teachings described herein.

FIG. 1 shows a block diagram of an example embodiment of a system for language processing using quantum and quantum-inspired language models.

FIG. 2 shows a flow chart of an example embodiment of a method of language processing using quantum and quantum-inspired language models.

FIG. 3 shows an example of a diagrammatic representation of tensor networks (TNs) in which the indices of a set of tensors are contracted.

FIG. 4 shows an example of a syntactic TN for a sentence.

FIG. 5 shows an example of a syntactic TN for a sentence and a corresponding representation as a Matrix Product State (MPS).

FIG. 6 shows an example of syntactic movement for a syntactic TN for a sentence.

FIG. 7 shows an example of a syntactic TN for a sentence where the last word is unspecified.

FIG. 8 shows an example of a syntactic TN for a sentence highlighting a syntactic environment for a word.

FIG. 9 shows an example of a TN diagram in which tensors obey a particular condition.

FIG. 10 shows an example of an iterative procedure to get a quantum circuit producing a language model quantum state for a given syntax tree.

FIG. 11 shows an example of a quantum circuit of 2-body gates producing a language model quantum state for a given syntax tree.

FIG. 12 shows an example of a MERA-like TN for some possible dependency grammar.

FIG. 13 shows an example of a TN for a 1-gram language model.

Further aspects and features of the example embodiments described herein will appear from the following description taken together with the accompanying drawings.

## DETAILED DESCRIPTION OF THE EMBODIMENTS

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object-oriented programming. The program code may be written in C++, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

In accordance with the teachings herein, there are provided various embodiments of systems and methods for language processing using quantum and quantum-inspired language models, and computer products for use therewith.

## 1.0 Overview

Advances in quantum computing have both (1) motivated the development of models that take advantage of the power of quantum computing and (2) inspired the development of models that can be used on classical computers, quantum computers, or hybrid classical/quantum computers. In that vein, one can build statistical language models that can be represented and manipulated naturally by quantum-inspired tensor networks as well as by quantum computers.

A technical advantage with statistical language models is that they can be extremely efficient to manipulate and allow to predict probabilities of sentences in human language, and unlike machine learning approaches, are fully explainable. To achieve this technical advantage, one can define a MERGE probability tensor, akin to a probabilistic context-free grammar. The probability vectors of meaningful sentences are given by mostly loop-free stochastic tensor networks (TN) built from diagonal tensors, such as Tree Tensor Networks and Matrix Product States, thus being computationally very efficient to manipulate. Such language models can also be obtained from quantum states that can be efficiently prepared on a gate-based universal quantum computer, such as the ones by IBM and IonQ.

## 1.1 System Structure

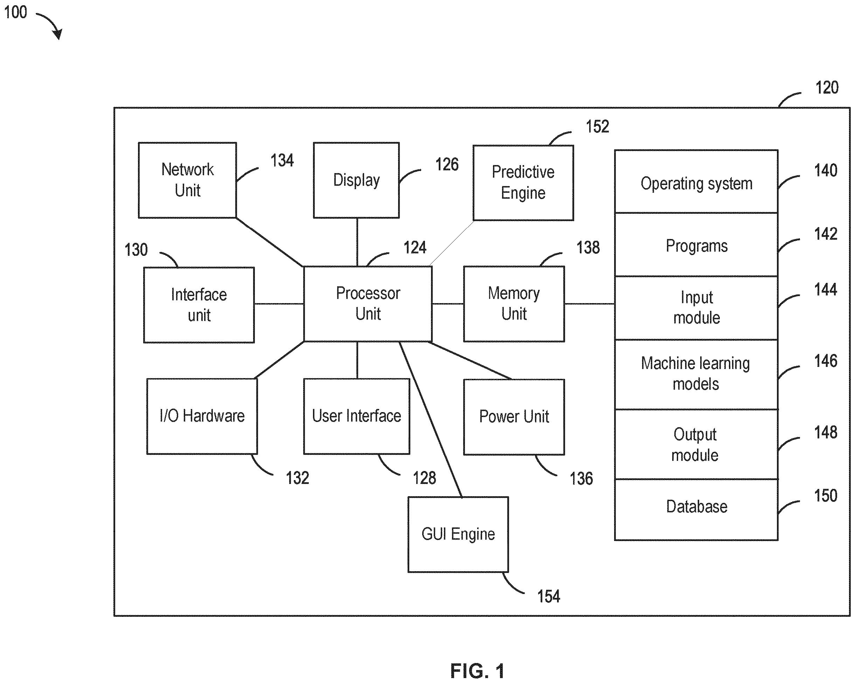

Reference is first made to FIG. 1, showing a block diagram of an example embodiment of system 100 for language processing using quantum and quantum-inspired language models. The system 100 includes at least one server 120. The server 120 may communicate with one or more user devices (not shown), for example, wirelessly or over the Internet. The system 100 may also be referred to as a machine learning system when used as such.

The user device may be a computing device that is operated by a user. The user device may be, for example, a smartphone, a smartwatch, a tablet computer, a laptop, a virtual reality (VR) device, or an augmented reality (AR) device. The user device may also be, for example, a combination of computing devices that operate together, such as a smartphone and a sensor. The user device may also be, for example, a device that is otherwise operated by a user, such as a drone, a robot, or remote-controlled device; in such a case, the user device may be operated, for example, by a user through a personal computing device (such as a smartphone). The user device may be configured to run an application (e.g., a mobile app) that communicates with other parts of the system 100, such as the server 120.

The server 120 may run on a single computer, including a processor unit 124, a display 126, a user interface 128, an interface unit 130, input/output (I/O) hardware 132, a network unit 134, a power unit 136, and a memory unit (also referred to as "data store") 138. In other embodiments, the server 120 may have more or less components but generally function in a similar manner. For example, the server 120 may be implemented using more than one computing device.

The processor unit 124 may include a standard processor, such as the Intel Xeon processor, for example. Alternatively, there may be a plurality of processors that are used by the processor unit 124, and these processors may function in parallel and perform certain functions. The display 126 may be, but not limited to, a computer monitor or an LCD display such as that for a tablet device. The user interface 128 may be an Application Programming Interface (API) or a web-based application that is accessible via the network unit 134. The network unit 134 may be a standard network adapter such as an Ethernet or 802.11x adapter.

The processor unit 124 may execute a predictive engine 152 that functions to provide predictions by using machine learning models 146 stored in the memory unit 138. The predictive engine 152 may build a predictive algorithm through machine learning. The training data may include, for example, image data, video data, audio data, and text.

The processor unit 124 can also execute a graphical user interface (GUI) engine 154 that is used to generate various GUIs. The GUI engine 154 provides data according to a certain layout for each user interface and also receives data input or control inputs from a user. The GUI then uses the inputs from the user to change the data that is shown on the current user interface, or changes the operation of the server 120 which may include showing a different user interface.

The memory unit 138 may store the program instructions for an operating system 140, program code 142 for other applications, an input module 144, a plurality of machine learning models 146, an output module 148, and a database 150. The machine learning models 146 may include, but are not limited to, image recognition and categorization algorithms based on deep learning models and other approaches. The database 150 may be, for example, a local database, an external database, a database on the cloud, multiple databases, or a combination thereof.

In at least one embodiment, the machine learning models 146 include a combination of convolutional and recurrent neural networks. Convolutional neural networks (CNNs) may be designed to recognize images or patterns. CNNs can perform convolution operations, which, for example, can be used to classify regions of an image, and see the edges of an object recognized in the image regions. Recurrent neural networks (RNNs) can be used to recognize sequences, such as text, speech, and temporal evolution, and therefore RNNs can be applied to a sequence of data to predict what will occur next. Accordingly, a CNN may be used to read what is happening on a given image at a given time, while an RNN can be used to provide an informational message.

The programs 142 comprise program code that, when executed, configures the processor unit 124 to operate in a particular manner to implement various functions and tools for the system 100.

**1.2 Method Overview**

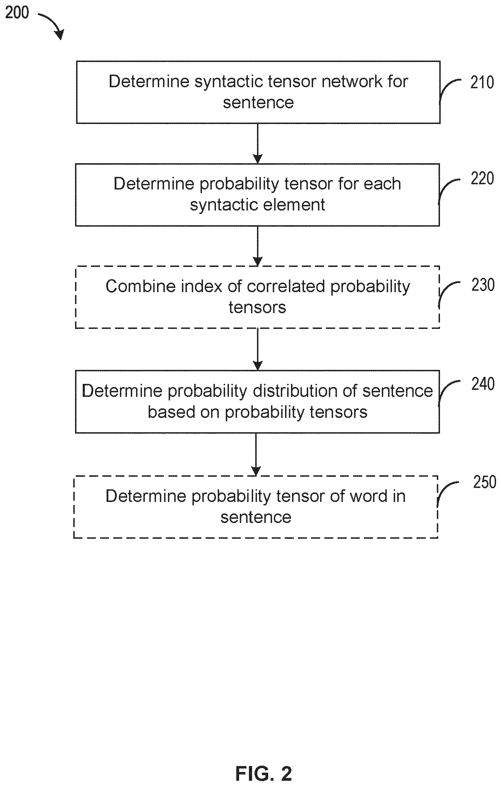

FIG. 2 shows a flow chart of an example embodiment of a method 200 for language processing using quantum and quantum-inspired language models. The method 200 may be performed by the system 100.

At 210, the system 100 determines a syntactic tensor network for a sentence. The syntactic tensor network may comprise a plurality of correlated syntactic elements. Each of the syntactic elements may comprise one or more words. The system may also determine linguistic information for each syntactic element in the sentence.

The syntactic tensor network may be a tensor tree network. The tensor tree network may be a matrix product state.

One or more syntactic elements of the plurality of syntactic elements may comprise one or more language units.

The syntactic tensor network may be a quantum state where the norm of the quantum state corresponds to the probability distribution of the sentence. The quantum state may be obtained from a quantum circuit.

At 220, the system 100 determines a probability tensor for each syntactic element. The probability tensor may comprise a probability distribution for each syntactic element in the sentence based on the linguistic information for the syntactic element. The probability tensor may be diagonal.

The probability tensor for each of the one or more syntactic elements (which may comprise one or more language units) may comprise probabilities associated with a merging operation of the one or more language units to obtain the syntactic element. An output of the merge operation may be uniquely determined by the one or more linguistic units.

The probability distribution of the probability tensor of each syntactic element may be based on a statistical frequency of the element in a grammar of the sentence.

Alternatively, the system 100 may retrieve the probability tensor from the database 150.

At 230, the system 100 combines an index (or indices) of correlated probability tensors. The system 100 may determine that an element of the syntactic tensor network is correlated with two or more other elements.

In response to determining that an element of the syntactic tensor network is correlated with the two or more other elements, the system 100 may combine an index of the probability tensor of the element with each index of the two or more other elements to obtain a fused index for the probability tensor of the element.

At 240, the system 100 determines the probability distribution of the sentence based on the probability tensor of each syntactic element in the sentence. The probability distribution of the sentence may be the product of a tensor contraction on a tensor comprising each syntactic element of the sentence.

The tensor contraction may comprise determining a product of coefficients of the probability tensor for each syntactic element of the sentence according to the equation $p_{w_1 \ldots w_n} = M^{[i]}_{e_1, A} \ldots M^{[j]}_{e_n, B}$ where $w_1 \ldots w_n$ are words in the sentence, $e_1 \ldots e_n$ are syntactic elements of the sentence, $i$ and $j$ are identifiers for the probability tensors M, and $A \ldots B$ are indices defining a syntactic environment of the syntactic element.

The syntactic environment of the syntactic element may comprise a linguistic group of the syntactic element and the linguistic group of a neighboring syntactic element correlated with the syntactic element.

At 250, the system 100 determines a probability tensor of a word in the sentence. The system 100 may determine the probability tensor of a word $w_n$ in the sentence, where $n$ is a position of the word in the sentence, based on a syntactic neighborhood of the word $w_n$ and a linguistic group associated with at least one immediate neighbor of the word $w_n$.

During execution (or after completion) of method 200, the system 100 may output the result of any calculations or determinations, for example, on some output device of the system 100 (such as a display or speakers).

The system 100 may carry out some or all of the steps of method 200 iteratively to carry out language processing. Alternatively, or in addition, system 100 may carry out some or all of the steps of method 200 in parallel.

In at least one implementation of method 200, one or more steps of method 200 are optional. For example, step 230 may be optional, in which case the method can go directly from step 220 to 240. Also, for example, step 250 may be optional, in which case the method can end after executing step 240.

The processing performed by the various steps of method 200 are described in further detail in sections 2 to 4, providing additional detail on how the various steps may work, along with examples showing possible inputs and outputs of the various steps of method 200.

**2.0 Tensor networks and probabilistic language models**

Language models can provide probability distributions over sequences of words (or phonemes, sounds, letter groupings, or even single letters). Such models produce probabilities $p_{w_1, \ldots, w_n}$ for a sequence of $n$ words, represented by the random variables $w_1, \ldots, w_n$, and are widely used in several technological ambits such as speech recognition, machine translation, text prediction, and so forth. In the AI context, such probabilities are obtained by *training* machine learning models, at the expense of having models that are non-explanatory. Such a technical problem may be overcome using an unconventional approach.

One such unconventional approach involves the use of a merge operation. A priori, the structure of the probability distribution depends on the grammatical constraints imposed by language itself, yet usually one assumes different types of ansatz (or initial guesses). Consider the general constraints that the MERGE operation in language imposes on the structure of these probability distributions. As a reminder, MERGE is the operation that takes two language units (e.g., a noun and an adjective) and merges them into a bigger unit (e.g., a noun phrase). A very natural description in terms of TNs just pops out, linking directly to Probabilistic Context-Free Grammars (PCFG), but not necessarily restricted to them.

**2.1 The MERGE tensor**

Consider the probability distribution that two given linguistic elements $\alpha$ and $\beta$ (e.g., two words, phonemes, sounds, letter groupings, or individual letters) merge into a new element $\gamma$ (e.g., some other syntagma). This probability distribution $M([\alpha, \beta] \to \gamma) = M(\alpha \cap \beta \cap \gamma)$ can in fact be described by a probability map M,

$$M: V_{in_1} \otimes V_{in_2} \to V_{out}, \qquad (1)$$

with $V_{in_1}$, $V_{in_2}$, and $V_{out}$ the input and output vector spaces. The coefficients of this map are given by a 3-index probability tensor $M_{\alpha\beta\gamma}$. The entries of this tensor are the probabilities of merging $\alpha$ and $\beta$ (the linguistic input of MERGE) into $\gamma$ (the linguistic output of MERGE).

The tensor $M_{\alpha\beta\gamma}$ obeys the usual normalization condition for probabilities,

$$\sum_{\alpha,\beta,\gamma} M_{\alpha\beta\gamma} = 1, \qquad (2)$$

i.e., the sum of all the probabilities is equal to 1. One can also compute residual probability distributions in the usual way, i.e., by summing up over the variables that are discarded. For instance, one could have

$$M'_{\gamma} = \sum_{\alpha,\beta} M_{\alpha\beta\gamma}, \qquad (3)$$

with $M'_{\gamma}$ the residual probability distribution of obtaining $\gamma$ as the output of MERGE, no matter the input.

From a linguistic point of view, the tensor $M_{\alpha\beta\gamma}$ is the implementation, at a mathematical level, of the MERGE operation for a probabilistic language model. If the same tensor is to be used everywhere in a syntactic structure, then this is the realization of a PCFG, i.e., a context-free grammar with probabilities assigned to its merging rules.

**2.2 Syntactic tensor networks**

The structure of a syntax tree maps directly into a *tensor network* (TN) for the probability distribution $p_{w1,\ldots,w_n}$ of the sentence. Specifically, every syntactic MERGE[i] corresponds to a 3-index tensor $M^{[i]}_{\alpha\beta\gamma}$, with *i* simply a label to identify individual tensors, which could in principle be different. Consider the case in which a variable $\mu$ is the result of merging $\delta$ and $\gamma$, with $\delta$ itself being the result of merging $\alpha$ and $\beta$. In such a case, following the usual mathematical treatment of probabilities, the probability of obtaining $\mu$ from $\alpha$, $\beta$, and $\gamma$ (i.e., no matter the value of $\delta$) is given by the expression

$$p_{\mu\gamma\alpha\beta} = \sum_{\delta} M^{[2]}_{\mu\delta\gamma} M^{[1]}_{\delta\alpha\beta}, \qquad (4)$$

i.e., summing over all the possible intermediate events represented by $\delta$.

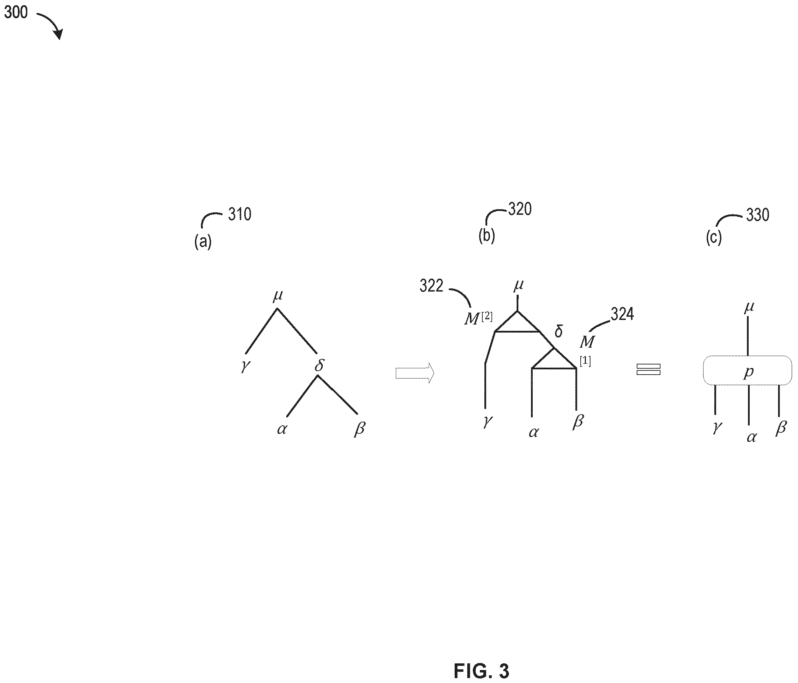

This admits an intuitive diagrammatic representation, as shown in FIG. 3. FIG. 3 shows an example of a diagrammatic representation 300 of TNs in which the indices of a set of tensors are contracted. In FIG. 3, there are: (a) two concatenated MERGE operations 310, where different Greek letters represent all the possible lexical variables. For language models, this structure can be represented by (b) a tensor network 320, where $M^{[1]}$ 322 and $M^{[2]}$ 324 are two different MERGE probability tensors. The contraction of the tensor network gives (c) the probability tensor $p_{\mu\gamma\alpha\beta}$ 330, which can be obtained using Eq.(4).

In FIG. 3, every tensor is a shape, and every index is a line. Open indices, i.e., those over which there is no sum, are just "free" lines, whereas sums over all the possible values of a common index between tensors are represented by lines connecting the tensors. Such sums are called *contractions*, i.e., in this example the index $\delta$ is contracted. These types of structures, where one has a set of tensors whose indices are contracted according to some network pattern, are called *tensor networks* (TN), and always admit a convenient diagrammatic representation as in FIG. 3. With this in mind, one arrives at the conclusion that syntax trees of sentences map into TNs of MERGE tensors $M^{[i]}_{\alpha\beta\gamma}$ at the level of probabilistic language models. Such structures are referred to as *syntactic TNs.*

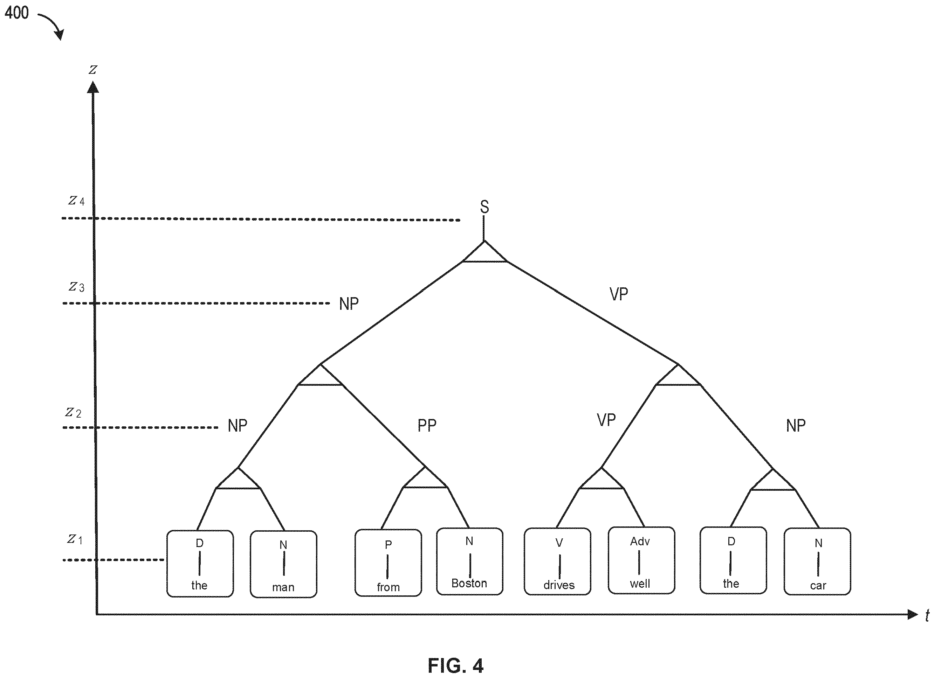

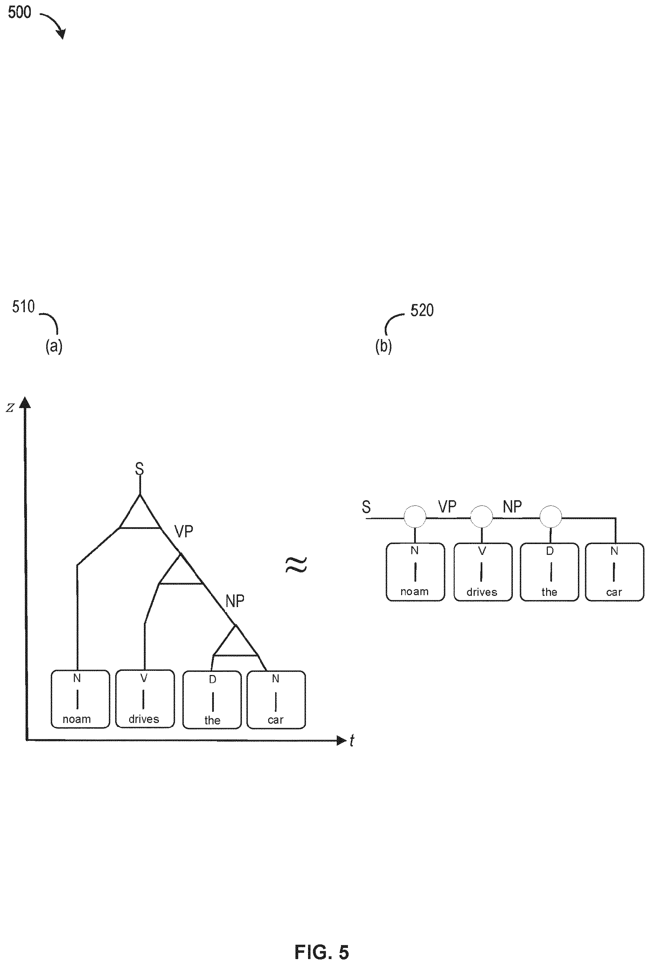

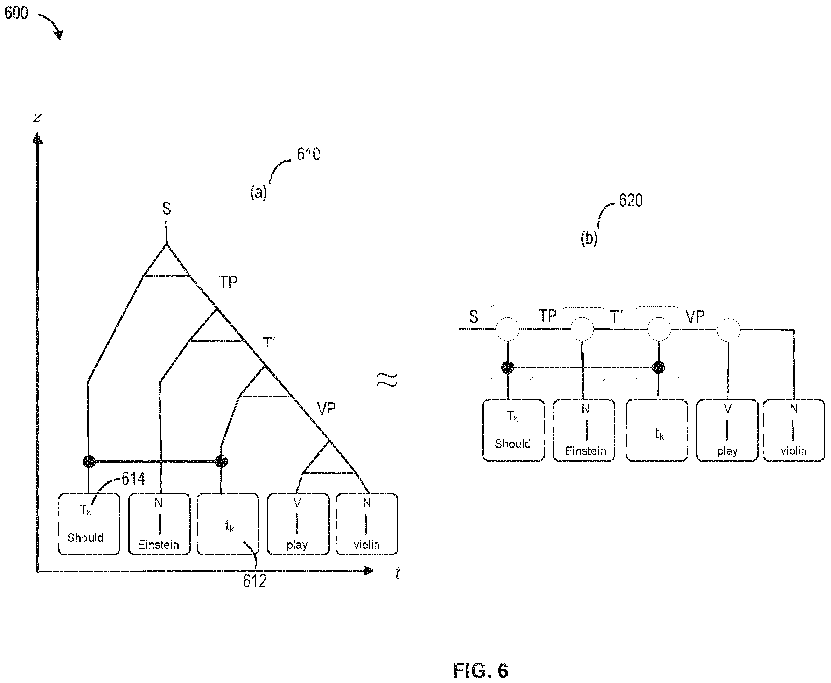

One can be more precise: if the syntax tree does not have long-range dependencies (i.e., it is made only of MERGEs), then the TN is loop-free and corresponds generically to a Tree Tensor Network (TTN), as shown in FIG. 4. If the MERGEs are sequential in time, then the TN is in fact a special case of TTN called a Matrix Product State (MPS), as shown in FIG. 5. Moreover, if the syntax tree has some long-range dependency (e.g., movement, agree, c-command, etc.), then this introduces some extra index in the network, correlating variables at different positions, and therefore introducing some loop in the diagram. As an example, this is in fact the case of the so-called CHAINS, where a lexical object is intrinsically interpreted in different contexts of a sentence but only externalized in one of them, for example, as shown in FIG. 6.

FIG. 4 shows an example of a syntactic TN 400 for the sentence "The man from Boston drives well the car", which includes the t and z axes, as well as the different renormalization scales. Linguistic information is naturally encoded in the TN at every possible scale. The contraction of the TN gives the probability of this sentence. In this particular example, the TN is a (binary) TTN. Note that the usual construction in English would be "The man from Boston drives the car well". In this example, the construction here is, however, intentional, in order to better exemplify a perfect binary TTN structure.

FIG. 5 shows an example of a syntactic TN 500 for the sentence "Noam drives the car". The TN is shown as (a) a TTN 510, which can be understood as (b) a Matrix Product State (MPS) 520.

FIG. 6 shows an example of syntactic movement 600 of a syntactic TN for the sentence "Should Einstein play violin?". At (a), a syntactic TN 610 shows that the element "Should" is created at the position of $t_k$ 612, but externalized at the position of $T_k$ 614 (hence it "moved"). At the level of the TN, this can easily be accounted for by an extra correlation between these two positions, i.e., an extra link between them (and perhaps two new tensors, as shown in the figure). This introduces a loop in the TN. However, as shown in (b), it is possible to redefine the overall structure as a loop-free TN 620 with tensors as those shown in the dashed boxes, and reshaped (or fused) tensor indices (i.e., whenever there are two indices together, fuse them into a single big index).

As an important property, note that a fact in grammar is that the output of a MERGE operation is always uniquely determined by its input. This is, given two objects being merged, there is only one possible output, no matter the context. This is an observation about how human language seems to work: the human brain does not merge an adjective $A$ and a noun $N$ into an object that sometimes behaves like a noun phrase $N\,P$, and sometimes like an adjectival phrase $A\,P$. Instead, the combined object behaves *always* like a noun phrase $N\,P$. So, given the input of MERGE, its output becomes fixed uniquely (but the converse is not true).

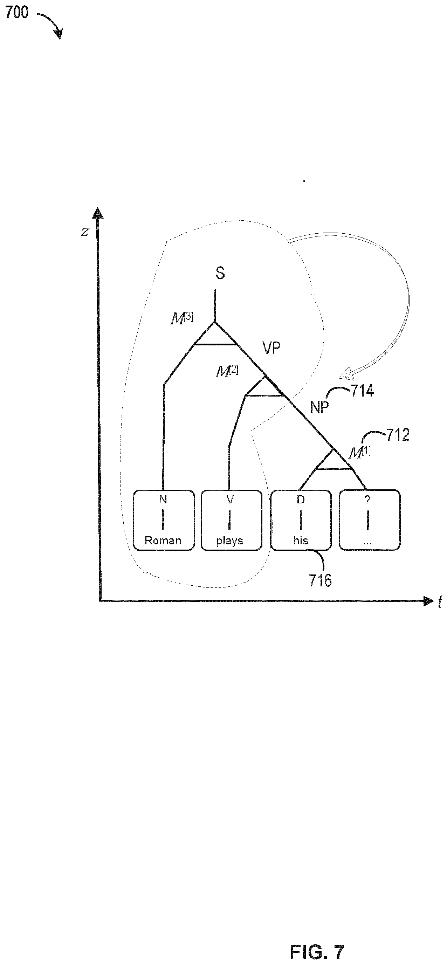

This turns out to have an important consequence: MERGE tensors are *diagonal.* As a consequence, once the sentence is given, or partially given, then the TN factorizes in a correlated way. To see why this is so, notice that if the output of MERGE is always uniquely determined by its input, then all the indices in the syntactic TN become fixed once the indices at the shortest time scale are fixed, i.e., once a specific sentence is given. Because of this, the probability of a specific sentence actually factors out in terms of correlated probabilities and no TN contraction is needed at all. The overall correct syntactic structure of the sentence is the global, non-local property that correlates all the probabilities amongst themselves. Moreover, the residual probability of, say, finding a specific word in a sentence that is partially given, can be easily computed using one MERGE tensor only, which contains information about both the immediate neighborhood of the word, as well as the overall syntactic neighborhood, as shown in FIG. 7.

FIG. 7 shows an example of a syntactic TN 700 for the sentence "Roman plays his ...", where the last word is unspecified. The syntactic environment inside the dashed area forces the upper index of tensor $M^{[1]}$ 712 to be an $N\,P$ 714. The first index of $M^{[1]}$ 712 is forced to be the determiner "his" 716. This constrains the probability of finding a given word at the last place of the sentence: whatever it is, it needs to merge with a determiner to become a noun phrase. There are not too many options: the word needs to be a noun. Notice that this is fully determined by the immediate neighborhood in the sentence (the determiner), as well as the syntactic environment (the dashed region).

For a given sentence, therefore, the formalism produces a correlated structure of 3-index tensors linking all possible renormalization scales, as shown in FIG. 7. For example, the overall probability of, e.g., the 4-word sentence "Roman plays his guitar" (an actual possibility in FIG. 7) reads

$$p_{w_1^*, w_2^* w_3^*, w_4^*} = M_{w_1^*, VP, S}^{[3]} M_{w_2^*, NP, VP}^{[2]} M_{w_3^*, w_4^*, NP}^{[1]}, \tag{5}$$

where $w_1^*, \ldots, w_4^*$ are the fixed words of the sentence, and no tensor contraction is needed at all. The above equation is a correlated product of coefficients from 3-index probability distributions, which encode *all* the syntactic information of the sentence at all time scales. The effect of this is more dramatic when it comes to residual probabilities: consider for instance predicting the word "drank" in the sentence "The man John met yesterday drank Japanese whisky". A 3-gram model (a rather common option in speech recognition) would give a probability distribution such as

$$p_{w_4^*, w_5^* w_6} \qquad 3 - \text{gram model}, \tag{6}$$

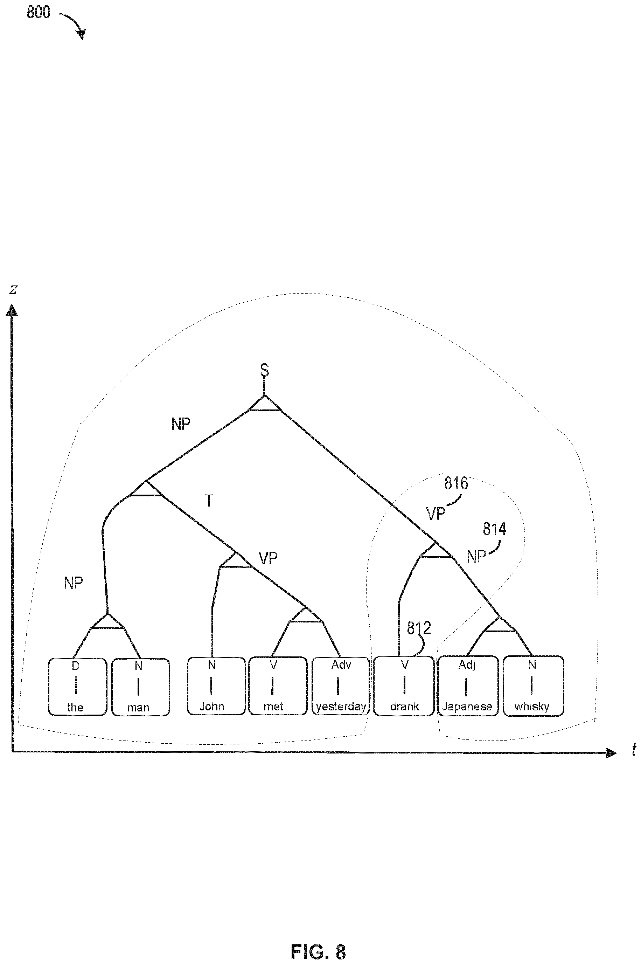

i.e., correlating the word $w_6$ only to "met" and "yesterday". The predictive power of this distribution is thus not very good, because there is no use whatsoever of the syntactic information from the rest of the sentence. However, in the TN description, the residual probability distribution, as shown in FIG. 8, is given by

$$M_{w_6, N P, V P}^{[6]} \qquad \text{Syntactic TN model}, \tag{7}$$

which includes all the relevant syntactic information of the environment needed to predict $w_6$ in the sentence. In other words, having $[_{NP} [_A$ Japanese] $[_N$ whiskey]], the rest of the sentence imposes that whatever goes in $w_6$ 812 needs to combine together with this $N P$ 814 necessarily into a verb phrase $V P$ 816.

FIG. 8 shows an example of a syntactic TN 800 for the sentence "The man John met yesterday drank Japanese whisky". The full syntactic environment of the word "drank" 812 is highlighted in the dashed region and determines the probability distribution of finding a specific lexical element at that place.

### 3.0 Language model quantum states

Language models can be obtained from quantum states that can be efficiently prepared on a gate-based universal quantum computer. To begin, a quantum state can be defined as follows:

$$|\Psi(T_n)\rangle = \frac{1}{Z(T_n)^{\frac{1}{2}}} \sum_{w_1, \ldots, w_n} \left(p_{w_1, \cdots, w_n}\right)^{\frac{1}{2}} |w_1, \ldots, w_n\rangle, \tag{8}$$

with $p_{w_1, \cdots, w_n}$ the probability of a sentence with words $w_1, \cdots, w_n$ and syntax tree $T_n$, and $\{|w_1, \ldots, w_n\rangle\}$ an orthonormal (tensor product) basis of some Hilbert space for $n$ parties, each party corresponding to the position of a word in the sentence. The dividing normalization factor $Z(T_n)$ is actually the partition function of the probability distribution, i.e.,

$$\langle\Psi(T_n)|\Psi(T_n)\rangle = \frac{1}{Z(T_n)} \sum_{w_1, \ldots, w_n} p_{w_1, \cdots, w_n} = 1. \tag{9}$$

The state in Eq.(8) is called a *language model quantum state.*

Because of the correlated factorization of syntactic TNs explained previously, one can see that these language model quantum states admit a TN representation of their coefficients, i.e., they are really *TN states* in the strict quantum-mechanical sense. The TN structure of the coefficient $\left(p_{w_1,\cdots,w_n}\right)^{\frac{1}{2}}$ is simply given by the same one as for the probability distribution $p_{w_1,\dots,w_n}$ (the syntactic TN), but replacing every coefficient of a MERGE tensor by its square root. More specifically, it is the same TN but with 3-index tensors $A^{[i]}$ of coefficients

$$A^{[i]}_{\alpha\beta\gamma} \equiv \left(M^{[i]}_{\alpha\beta\gamma}\right)^{\frac{1}{2}}, \tag{10}$$

again with i being a label for the different tensors. This prescription is a direct consequence of tensors being diagonal in the syntactic TN. Notice also that these tensors obey the condition

$$\sum_{\alpha,\beta} A^{[i]}_{\alpha\beta\gamma} \left(A^{[i]}_{\alpha\beta\gamma'}\right)^* = \left(\sum_{\alpha,\beta} M^{[i]}_{\alpha\beta\gamma}\right) \delta_{\gamma\gamma'} = p^{[i]}_\gamma \delta_{\gamma\gamma'}, \tag{11}$$

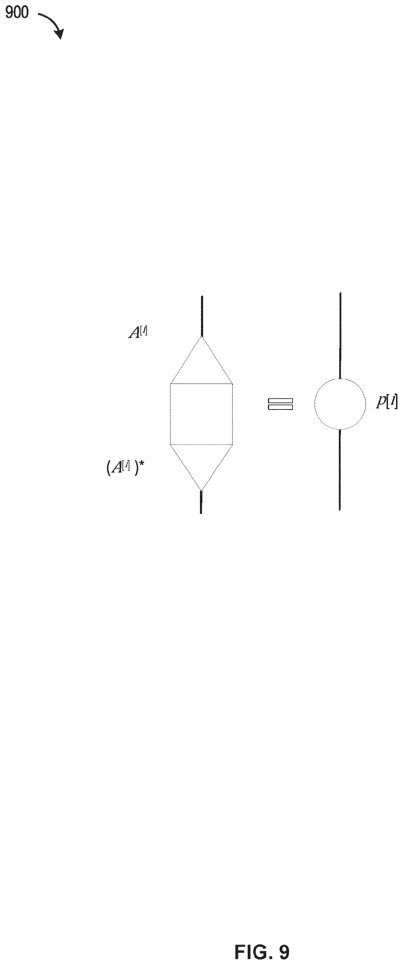

with $p^{[i]}_\gamma$ the probability of merging at position i any two given lexical objects into $\gamma$, and $\delta_{\gamma\gamma'}$ the Kronecker delta, as shown in FIG. 9.

FIG. 9 shows an example of a TN diagram 900 for Eq.(11). The matrix on the right-hand side is diagonal, and with entries $p^{[i]}_\gamma \delta_{\gamma\gamma'}$.

The language TN quantum state has a number of interesting properties.

First, notice that if this quantum state becomes (somehow) experimentally available in an actual quantum system, then it can be used to do truly random sampling of the probability distribution of sentences with that particular syntax tree. For comparison, all classical samplings are based on pseudo-random number generators, which are known to induce errors in the long run for, e.g., Monte Carlo methods. The state can also be useful, for instance, to find the most likely sentences in a language model.

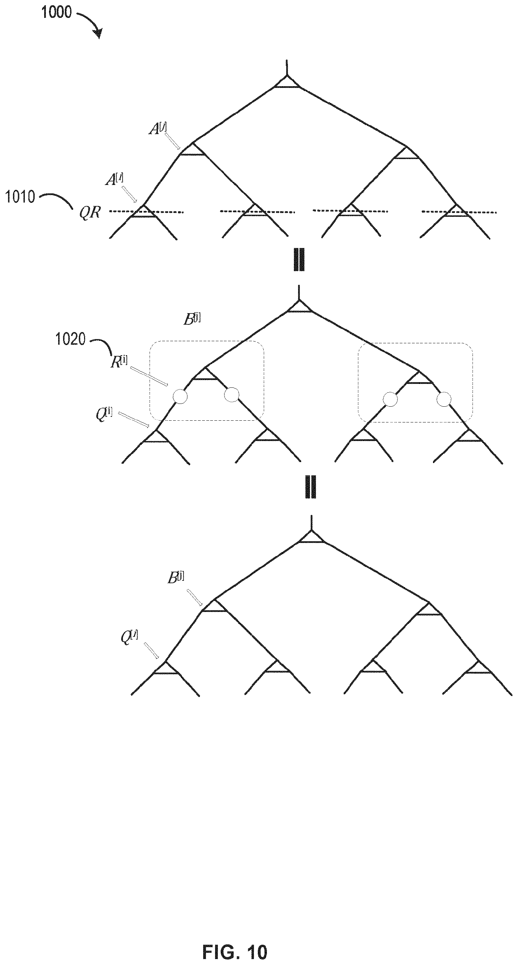

Second, the state can, in fact, be created by a quantum circuit with as many two-body gates as $A$-tensors. An example of this procedure is shown in FIG. 10. Starting from the shortest renormalization scale $z_1$, one reshapes the indices of the $A$-tensors as a matrix and performs a QR decomposition 1010, as shown in FIG. 10. Since the $A$-tensors are real and positive, the matrix Q is orthogonal, i.e., $Q^T Q = \mathbb{I}$. Reshaping back Q as a 3-index tensor provides an isometric tensor, which is kept at the particular sites of the network at that renormalization scale. Matrices R 1020, however, are contracted with the A-tensors at the next renormalization scale $z_2$.

FIG. 10 shows an example of an iterative procedure 1000 to get the quantum circuit producing a language model quantum state for a given syntax tree. The dashed lines in the upper diagram correspond to QR decompositions. The process is iterated at every scale, until reaching the top.

The resulting tensors, identified as $B$, are then also $QR$-decomposed, where the Qs define again isometries, which are kept in the network, and the Rs are contracted with the $A$-tensors at the next renormalization scale. By iterating this process up to the top level, one gets a TN of isometric 3-index tensors $Q^{[i]}$, and a quantum state $|\Omega\rangle$ at the very top carrying non-local information about the probability of the whole sentence. In particular, since tensors $Q^{[i]}$ are isometries, one has that

$$\langle\Psi(T_n)|\Psi(T_n)\rangle = \frac{1}{Z(T_n)}\langle\Omega|\Omega\rangle = 1, \tag{12}$$

(where the last equality follows from the normalization of the state), and therefore

$$\langle \Omega | \Omega \rangle = Z(T_n) = \sum_{w_1,\ldots,w_n} p_{w_1,\cdots,w_n}, \qquad (13)$$

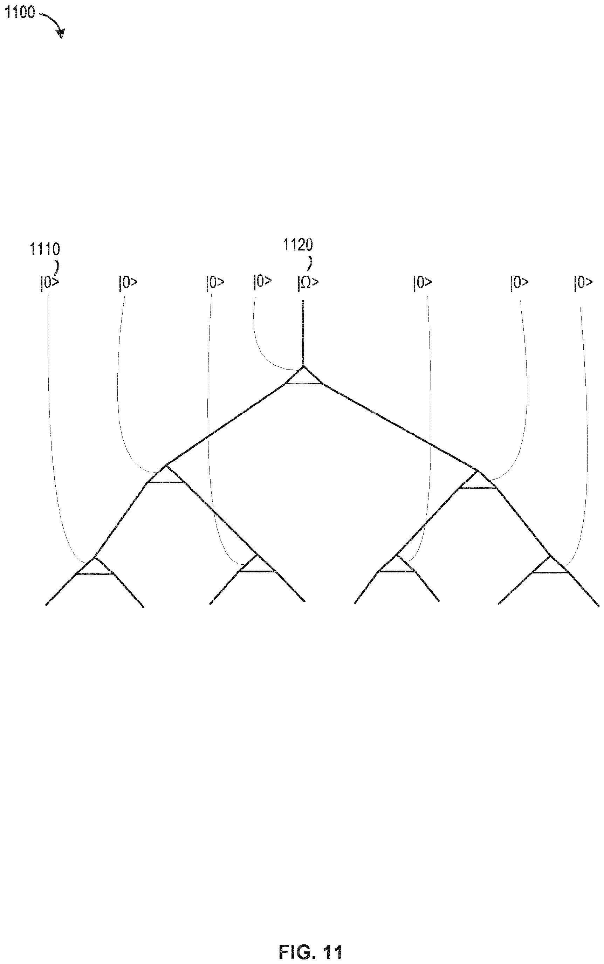

which means that the norm of the quantum state $|\Omega\rangle$ is the overall probability of having an n-word sentence (whichever) with syntax tree $T_n$ in the language model. This global information just moved up to the top level of the TN. Finally, in order to promote this structure to a quantum circuit, notice that an isometric tensor can be understood as a two-body unitary gate, where one of the indices is fixed to some ancillary state 10), as shown in FIG. 11. The resulting diagram can be interpreted as the picture of the quantum circuit producing the desired quantum state. The conclusion is that if the MERGE tensors are given, then one could in principle produce these quantum states efficiently in a quantum computer or a quantum simulator. In addition, the description above has been for TNs without loops, but it can be generalized to other situations. In case of having a small number of loops in the network (e.g., in CHAINS), there is also a similar procedure as the one indicated here by playing with several tensor decompositions (QR, Singular Value Decomposition, etc.), always sending the non-unitary parts upwards in the syntactic network.

FIG. 11 shows an example of a quantum circuit 1100 of 2-body gates producing a language model quantum state for a given syntax tree. Ancillary degrees of freedom are fixed to the quantum state $|0\rangle$ 1110. The state $|\Omega\rangle$ 1120 at the top may be produced from $|0\rangle$ by some extra 1-body gate, and its squared norm codifies the overall probability of the tree.

### 4.0 Arbitrary grammars

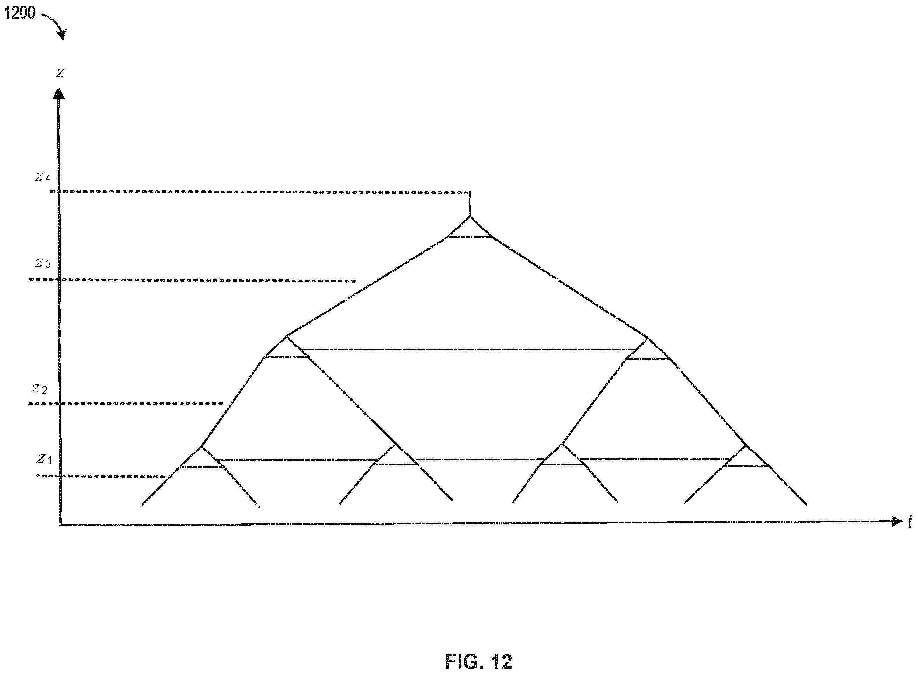

The tensor network picture of language is not necessarily restricted to the cases presented above, and in fact can be used to describe the correlation structure of, essentially, any type of grammar and/or language model. For instance, the trees of *dependency grammars,* though not based on the MERGE operation, also admit a TN representation of their correlations when put as a probabilistic language model. One can even add long-range dependencies between the probability distributions in constituency grammars, as was shown for the case of chains in FIG. 6, but which can in fact be generalized, obtaining what is known in physics as a MERA-like tensor network, an example of which is shown in FIG. 12. As a matter of fact, it may be possible to model with TNs *any* grammatical correlation structure, even if not directly linked to human language. One example is a syntactic structure based on a hypothetical MERGE operation with multiple outputs for a given input.

FIG. 12 shows an example of a MERA-like TN 1200 for some possible dependency grammar. Probability distributions (tensors) are correlated at every renormalization scale. The structure is no longer a tree if all possible dependencies are taken into account at every scale.

From a practical perspective, the so-called *N-gram models,* where the probability of observing a word is assumed to depend only on the history of the preceding $N - 1$ words, also admit a similar description. For instance, the case of 1-grams corresponds to the product probability distribution

$$p_{w_1,\ldots,w_n} = p_{w_1}^{[1]} \cdots p_{w_n}^{[n]}, \qquad (14)$$

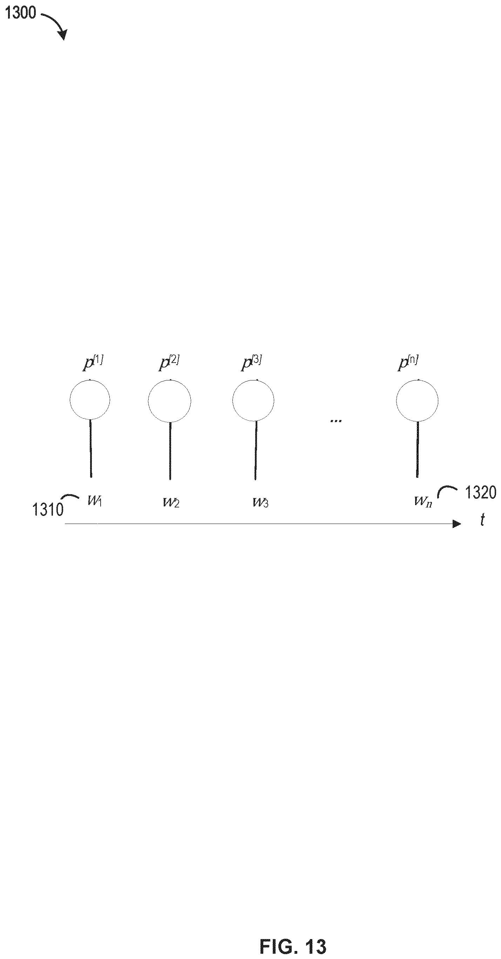

which can be represented by, for example, the TN diagram of FIG. 13.

FIG. 13 shows an example of a TN 1300 for a 1-gram language model. Only the time axis is relevant, and there is no correlation between the words $w_1,\ldots,w_n$ (from $w_1$ 1310 to $w_n$ 1320). In physics, this is the analog of the so-called mean-field theory approximation.

Such a 1-gram TN does not include *any* correlation between the words. For comparison, similar separable TNs are also the ones used in the so-called *mean-field* approximation to strongly correlated systems, where correlations between different sites are discarded, and which is known to fail whenever correlations are important. For the case of more complicated *N*-grams, one can actually define an appropriate language model quantum state, i.e.,

$$|\Psi(N - \text{gram})\rangle = \frac{1}{Z^{\frac{1}{2}}} \sum_{\alpha \in \text{N-gram}} (p_\alpha)^{\frac{1}{2}} |\alpha\rangle, \qquad (15)$$

with $\alpha$ an index running over all possible *N*-grams, $p_\alpha$ their probabilities, $|\alpha\rangle$ a set of orthonormal states, one for every *N*-gram, and Z the partition function of the distribution. Once such a state is available, one can do similar things as for the TN language models discussed previously, such as truly random sampling.

**5.0 Technical problems being solved**

The embodiments of the invention described herein may solve a number of technical problems in machine-assisted language processing, related to language recognition system, speech recognition, translation, and more. In particular, it produces fully explainable language models, unlike most AI approaches. The TN language models can be extremely efficient to manipulate, and extremely precise in predicting sentences. The TN language models may provide savings in processing time and storage space required, for example, by replacing exponential growth in conventional systems with polynomial growth.

The quantum language models can be extremely efficient to produce on a quantum computer, extremely precise in predicting sentences, and able to implement true random sampling of language probability distributions. Although the structure of the language models can be implemented on classical computers, the quantum language models can be loaded onto a quantum computer, for example, to allow for quantum machine learning, such as when one or more of the quantum machine learning components are stored in qubits or processed by a quantum circuit.

In the general case, the models need no training, and only feed on statistical frequencies of words and MERGEs that can be retrieved from existing data for every single language. In the general case, the models are also fully generalizable to other grammars, including non-human, at no extra cost.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

**Claims**

1. A system for determining a probability distribution of a sentence, the system comprising at least one processor configured to:

   - determine a syntactic tensor network for the sentence, the syntactic tensor network comprising a plurality of correlated syntactic elements, each of the syntactic elements comprising one or more words, and linguistic information for each syntactic element in the sentence;
   - determine a probability tensor comprising a probability distribution for each syntactic element in the sentence based on the linguistic information for the syntactic element; and
   - determine the probability distribution of the sentence based on the probability tensor of each syntactic element in the sentence.

2. The system of claim 1, wherein determining the probability distribution of the sentence comprises a tensor contraction on a tensor comprising each syntactic element of the sentence.

3. The system of claim 2, wherein the tensor contraction comprises determining a product of coefficients of the probability tensor for each syntactic element of the sentence according to equation $p_{w_1 \ldots w_n} = M^{[i]}_{e_1,A} \ldots M^{[j]}_{e_n,B}$ where $w_1 \ldots w_n$ are words in the sentence, $e_1 \ldots e_n$ are syntactic elements of the sentence, $i$ and $j$ are identifiers for the probability tensors M, and A ... B are indices defining a syntactic environment of the syntactic element.

4. The system of claim 3, wherein the syntactic environment of the syntactic element comprises a linguistic group of the syntactic element and the linguistic group of a neighboring syntactic element correlated with the syntactic element.

5. The system of claim 1, wherein the at least one processor is further configured to:

   - determine a probability tensor of a word $w_n$ in the sentence, wherein $n$ is a position of the word in the sentence, based on a syntactic neighborhood of the word $w_n$ and a linguistic group associated with at least one immediate neighbor of the word $w_n$.

6. The system of claim 1, wherein the syntactic tensor network is a tensor tree network.

7. The system of claim 6, wherein the tensor tree network is a matrix product state.

8. The system of claim 1, wherein the at least one processor is further configured to:

   - determine that an element of the syntactic tensor network is correlated with two or more other elements; and
   - in response to determining that an element of the syntactic tensor network is correlated with the two or more other elements, combine an index of the probability tensor of the element with each index of the two or more other elements to obtain a fused index for the probability tensor of the element.

9. The system of claim 1, wherein one or more syntactic elements of the plurality of syntactic elements comprise one or more language units and wherein the probability tensor for each of the one or more syntactic elements comprising one or more language units comprises probabilities associated with a merging operation of the one or more language units to obtain the syntactic element.

10. The system of claim 9, wherein an output of the merge operation is uniquely determined by the one or more linguistic units.

11. The system of claim 1, wherein the probability tensor is diagonal.

12. The system of claim 1, wherein the probability distribution of the probability tensor of each syntactic element is based on a statistical frequency of the element in a grammar of the sentence.

13. The system of claim 1, wherein the at least one processor is further configured to:

   - retrieve the probability tensor from a database in communication with the at least one processor.

14. The system of claim 1, wherein the syntactic tensor network is a quantum state wherein the norm of the quantum state corresponds to the probability distribution of the sentence.

15. A method for determining a probability distribution of a sentence, the method comprising:

   - determining a syntactic tensor network for the sentence, the syntactic tensor network comprising a plurality of correlated syntactic elements, each of the syntactic elements comprising one or more words, and linguistic information for each syntactic element in the sentence;
   - determining a probability tensor comprising a probability distribution for each syntactic element in the sentence based on the linguistic information for the syntactic element; and
   - determining the probability distribution of the sentence based on the probability tensor of each syntactic element in the sentence.

FIG. 1

EP 4 383 124 A1

200

| Determine syntactic tensor network for sentence | 210 |

| Determine probability tensor for each syntactic element | 220 |

| Combine index of correlated probability tensors | 230 |

| Determine probability distribution of sentence based on probability tensors | 240 |

| Determine probability tensor of word in sentence | 250 |

**FIG. 2**

FIG. 3

**FIG. 4**

500

510

(a)

520

(b)

FIG. 5

FIG. 6

**FIG. 7**

800

FIG. 8

900

$A^{[l]}$

$(A^{[l]})^*$

$\equiv$

$p[l]$

FIG. 9

FIG. 10

1100

1110

1120

$|0\rangle$  $|0\rangle$  $|0\rangle$  $|0\rangle$  $|\Omega\rangle$  $|0\rangle$  $|0\rangle$  $|0\rangle$

**FIG. 11**

EP 4 383 124 A1

**FIG. 12**

1300

$p^{[1]}$    $p^{[2]}$    $p^{[3]}$              $p^{[n]}$

...

1310    $w_1$    $w_2$    $w_3$         $w_n$    1320

$t$

FIG. 13

Europäisches
Patentamt
European
Patent Office
Office européen
des brevets

# EUROPEAN SEARCH REPORT

Application Number

EP 22 38 3194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANGEL J GALLEGO ET AL: "Language Design as Information Renormalization", ARXIV.ORG, CORNELL UNIVERSITY LIBRARY, 201 OLIN LIBRARY CORNELL UNIVERSITY ITHACA, NY 14853, 6 February 2022 (2022-02-06), XP091143586, DOI: 10.1007/S42979-021-01002-Y * abstract * | 1-15 | INV. G06F40/44 |
| A | CORREIA A D ET AL: "Grover's Algorithm for Question Answering", ARXIV.ORG, CORNELL UNIVERSITY LIBRARY, 201 OLIN LIBRARY CORNELL UNIVERSITY ITHACA, NY 14853, 27 July 2021 (2021-07-27), XP091005007, * abstract * | 1-15 | |
| A | US 11 010 666 B1 (TERILLA JOHN [US] ET AL) 18 May 2021 (2021-05-18) * abstract * | 1-15 | |

TECHNICAL FIELDS
SEARCHED      (IPC)

G06F

The present search report has been drawn up for all claims

| Place of search | Date of completion of the search | Examiner |
|---|---|---|
| Berlin | 24 April 2023 | Triest, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 3194

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2023

| Patent document cited in search report | Publication date | Patent family member(s) | Publication date |
|---|---|---|---|
| US 11010666 B1 | 18-05-2021 | NONE | |

EPO FORM P0459